# EUROPEAN PATENT APPLICATION

(11) **EP 4 818 752 A1**
(43) Date of publication of application: **07.10.2026**
(21) Application number: 26168836.0
(22) Date of filing: 30.03.2026
(51) Int. Cl.: G01S 13/84, G01S 13/76

(54) **BLUETOOTH RANGING CORRECTION METHOD AND APPARATUS, REFLECTOR, AND MEDIUM**

(30) Priority: 01.04.2025 CN 202510398723
(71) Applicant: Kunshan Telink Semiconductor Co., Ltd., Kunshan, Jiangsu 215300 (CN)
(72) Inventor: HUANG, Haili, Shanghai, 201203 (CN); LOU, Wenfeng, Shanghai, 201203 (CN); JIN, Haipeng, Shanghai, 201203 (CN)
(74) Representative: Kutzenberger Wolff & Partner

(57) **Abstract**

A Bluetooth ranging correction method and apparatus, a reflector, and a medium are disclosed. The method includes: receiving, by a reflector, a first continuous wave signal from an initiator, obtaining a first timestamp, and performing frequency conversion on the first continuous wave signal to obtain a first measurement value; switching, by the reflector, to a transmission state, and obtaining a second timestamp; receiving, by the initiator, a second continuous wave signal from the reflector, and performing frequency conversion on the second continuous wave signal to obtain a second measurement value; and obtaining, by the reflector, the second measurement value from the initiator, performing correction on the first and second measurement values using the first and second timestamps and determining a distance between the initiator and the reflector by using the corrected first and second measurement values. The method can correct the distance measurement, reducing measurement deviation during Bluetooth ranging.

## Description

### TECHNICAL FIELD

The present disclosure relates to the field of Bluetooth technology, and more particularly to a Bluetooth ranging correction method and apparatus, a reflector, and a medium.

### BACKGROUND

Current mainstream Bluetooth devices typically use a low-IF receiver for signal transmission and reception. A low-IF receiver is a receiver architecture that down-converts a radio frequency (RF) signal to a low-frequency signal (but not zero) close to direct current (DC). It uses a local oscillator signal offset from the reception band by a certain frequency interval, thereby avoiding DC offset and flicker noise issues common in zero-IF receivers.

However, when a Bluetooth device using a low-IF receiver performs frequency conversion, the generated digital intermediate frequency (IF) is inconsistent with the actual intermediate frequency, causing a deviation in the measured phase. Therefore, how to reduce measurement deviation during Bluetooth ranging is an urgent problem to be solved.

### SUMMARY

In a first aspect, the present disclosure provides a Bluetooth ranging correction method applicable to a Bluetooth ranging apparatus including an initiator and a reflector. The method includes:
transmitting, by the initiator, a first continuous wave signal;
receiving, by the reflector, the first continuous wave signal, and obtaining a first timestamp indicating time at which the reflector receives the first continuous wave signal;
performing, by the reflector, frequency conversion on the first continuous wave signal to obtain a first measurement value;
switching, by the reflector, to a transmission state, and obtaining a second timestamp indicating time at which the reflector switches to the transmission state;
switching, by the initiator, to a reception state;
transmitting, by the reflector, a second continuous wave signal;
receiving, by the initiator, the second continuous wave signal transmitted by the reflector, and performing frequency conversion on the second continuous wave signal to obtain a second measurement value; and
obtaining, by the reflector, the second measurement value from the initiator, performing correction on the first measurement value and the second measurement value using the first timestamp and the second timestamp, and determining a distance between the initiator and the reflector by using the corrected first and second measurement values.

In some possible implementations, a digital mixer of the reflector remains enabled during the Bluetooth ranging correction, to allow for compensation for variation in phase of the digital mixer of the reflector introduced in measurements across channels of different frequencies.

In some possible implementations, performing, by the reflector, correction on the first measurement value and the second measurement value using the first timestamp and the second timestamp includes:
determining, by the reflector, a product of the first measurement value and the second measurement value; and
performing, by the reflector, correction on the product using the first timestamp and the second timestamp.

In some possible implementations, the first measurement value PCTi is calculated using the following formula: 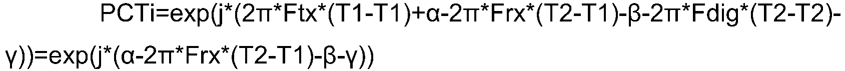 PCTi=exp(j*(2π*Ftx*(T1-T1)+α-2π*Frx*(T2-T1)-β-2π*Fdig*(T2-T2)-γ))=exp(j*(α-2π*Frx*(T2-T1)-β-γ))
wherein Ftx represents an operating frequency of a phase-locked loop (PLL) in a transmission state, Frx represents an operating frequency of the PLL in a reception state, Fdig represents an operating frequency of a digital mixer, T1 represents time at which the initiator transmits the first continuous wave signal, T2 represents time at which the reflector receives the first continuous wave signal, α represents a phase of the initiator at time T1, β represents a phase of the reflector at time T1, and γ represents a phase of the digital mixer of the reflector at time T2.

In some possible implementations, the second measurement value PCTr is calculated using the following formula:
$PCTr = exp \left(j*\left(2π*Frx*\left(T3-T1\right)+β+2π*Ftx*\left(T5-T3\right)-α-2π*Ftx*\left(T6-T1\right)+σ\right)\right)$
wherein T3 represents time at which the reflector switches to the transmission state, T4 represents time at which the initiator switches to the reception state, T5 represents time at which the reflector starts transmitting the second continuous wave signal, T6 represents time at which the initiator receives the second continuous wave signal, and σ represents a phase jump of the initiator caused by switching between transmission and reception.

In some possible implementations, the reflector calculates a product PCTi*PCTr of the first measurement value PCTi and the second measurement value PCTr using the following formula: 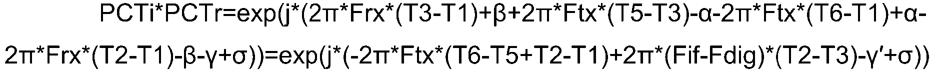 PCTi*PCTr=exp(j*(2π*Frx*(T3-T1)+β+2π*Ftx*(T5-T3)-α-2π*Ftx*(T6-T1)+α-2π*Frx*(T2-T1)-β-γ+σ))=exp(j*(-2π*Ftx*(T6-T5+T2-T1)+2π*(Fif-Fdig)*(T2-T3)-γ'+σ))
wherein Ftx=Frx+Fif, and γ' represents a phase of the digital mixer of the reflector at time T3.

In a second aspect, the present disclosure provides a Bluetooth ranging correction method applicable to a reflector of a Bluetooth ranging apparatus further including an initiator. The method includes:
receiving, by the reflector, a first continuous wave signal transmitted by the initiator, and obtaining a first timestamp indicating time at which the reflector receives the first continuous wave signal;
performing, by the reflector, frequency conversion on the first continuous wave signal to obtain a first measurement value;
switching, by the reflector, to a transmission state, and obtaining a second timestamp indicating time at which the reflector switches to the transmission state;
transmitting, by the reflector, a second continuous wave signal to the initiator, the initiator being configured to perform frequency conversion on the second continuous wave signal to obtain a second measurement value; and
obtaining, by the reflector, the second measurement value from the initiator, performing correction on the first measurement value and the second measurement value using the first timestamp and the second timestamp, and determining a distance between the initiator and the reflector by using the corrected first and second measurement values.

In some possible implementations, a digital mixer of the reflector remains enabled during the Bluetooth ranging correction, to allow for compensation for variation in phase of the digital mixer of the reflector introduced in measurements across channels of different frequencies.

In some possible implementations, performing, by the reflector, correction on the first measurement value and the second measurement value using the first timestamp and the second timestamp includes:
determining, by the reflector, a product of the first measurement value and the second measurement value; and
performing, by the reflector, correction on the product using the first timestamp and the second timestamp.

In some possible implementations, the first measurement value PCTi is calculated using the following formula: 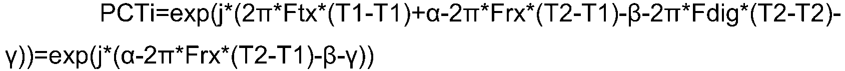 PCTi=exp(j*(2π*Ftx*(T1-T1)+α-2π*Frx*(T2-T1)-β-2π*Fdig*(T2-T2)-γ))=exp(j*(α-2π*Frx*(T2-T1)-β-γ))
wherein Ftx represents an operating frequency of a PLL in a transmission state, Frx represents an operating frequency of the PLL in a reception state, Fdig represents an operating frequency of a digital mixer, T1 represents time at which the initiator transmits the first continuous wave signal, T2 represents time at which the reflector receives the first continuous wave signal, α represents a phase of the initiator at time T1, β represents a phase of the reflector at time T1, and γ represents a phase of the digital mixer of the reflector at time T2.

In some possible implementations, the second measurement value PCTr is calculated using the following formula:
$PCTr = exp \left(j*\left(2π*Frx*\left(T3-T1\right)+β+2π*Ftx*\left(T5-T3\right)-α-2π*Ftx*\left(T6-T1\right)+σ\right)\right)$
wherein T3 represents time at which the reflector switches to the transmission state, T4 represents time at which the initiator switches to the reception state, T5 represents time at which the reflector starts transmitting the second continuous wave signal, T6 represents time at which the initiator receives the second continuous wave signal, and σ represents a phase jump of the initiator caused by switching between transmission and reception.

In some possible implementations, the reflector calculates a product PCTi*PCTr of the first measurement value PCTi and the second measurement value PCTr using the following formula: 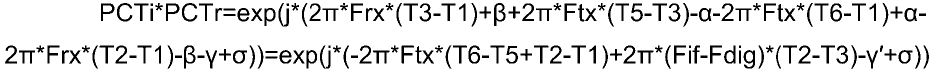 PCTi*PCTr=exp(j*(2π*Frx*(T3-T1)+β+2π*Ftx*(T5-T3)-α-2π*Ftx*(T6-T1)+α-2π*Frx*(T2-T1)-β-γ+σ))=exp(j*(-2π*Ftx*(T6-T5+T2-T1)+2π*(Fif-Fdig)*(T2-T3)-γ'+σ))
wherein Ftx=Frx+Fif, and γ' represents a phase of the digital mixer of the reflector at time T3.

In a third aspect, the present disclosure provides a Bluetooth ranging apparatus including an initiator and a reflector.

The initiator is configured to transmit a first continuous wave signal.

The reflector is configured to receive the first continuous wave signal, and obtain a first timestamp indicating time at which the reflector receives the first continuous wave signal.

The reflector is configured to perform frequency conversion on the first continuous wave signal to obtain a first measurement value.

The reflector is configured to switch to a transmission state, and obtain a second timestamp indicating time at which the reflector switches to the transmission state.

The initiator is configured to switch to a reception state.

The reflector is configured to transmit a second continuous wave signal.

The initiator is configured to receive the second continuous wave signal transmitted by the reflector, and perform frequency conversion on the second continuous wave signal to obtain a second measurement value.

The reflector is configured to obtain the second measurement value from the initiator, perform correction on the first measurement value and the second measurement value using the first timestamp and the second timestamp, and determine a distance between the initiator and the reflector by using the corrected first and second measurement values.

In a fourth aspect, the present disclosure provides a reflector for a Bluetooth ranging apparatus further including an initiator.

The reflector is configured to receive a first continuous wave signal transmitted by the initiator, and obtain a first timestamp indicating time at which the reflector receives the first continuous wave signal.

The reflector is configured to perform frequency conversion on the first continuous wave signal to obtain a first measurement value.

The reflector is configured to switch to a transmission state, and obtain a second timestamp indicating time at which the reflector switches to the transmission state.

The reflector is configured to transmit a second continuous wave signal to the initiator, the initiator being configured to perform frequency conversion on the second continuous wave signal to obtain a second measurement value.

The reflector is configured to obtain the second measurement value from the initiator, perform correction on the first measurement value and the second measurement value using the first timestamp and the second timestamp, and determine a distance between the initiator and the reflector by using the corrected first and second measurement values.

In a fifth aspect, the present disclosure provides a computer-readable storage medium having stored thereon a program that, when executed by a multi-core processor, causes the multi-core processor to perform the method according to any one of the first and second aspects.

One of the advantages of the above embodiments is that by using the first timestamp and the second timestamp, the phase deviation caused by the inconsistency between the digital intermediate frequency and the actual intermediate frequency can be eliminated. Thus, the technical solution of the present disclosure can correct the distance measurement between the initiator and the reflector and reduce measurement deviation during Bluetooth ranging.

### BRIEF DESCRIPTION OF THE DRAWINGS

By reading the detailed description of the exemplary embodiments below, those skilled in the art will understand the advantages and benefits described herein as well as other advantages and benefits. The drawings are only for the purpose of illustrating the exemplary embodiments and are not to be considered as limiting the present disclosure. In the drawings:
FIG. 1 is a schematic flowchart of a Bluetooth ranging correction method according to an embodiment of the present disclosure;
FIG. 2 is a schematic flowchart of signal interaction between an initiator and a reflector according to an embodiment of the present disclosure;
FIG. 3 is a schematic flowchart of another Bluetooth ranging correction method according to an embodiment of the present disclosure;
FIG. 4 is a schematic diagram of a Bluetooth ranging apparatus according to an embodiment of the present disclosure; and
FIG. 5 is a communication schematic diagram of a reflector according to an embodiment of the present disclosure.

In the drawings, the same or corresponding reference numerals denote the same or corresponding parts.

### DETAILED DESCRIPTION

Exemplary embodiments of the present disclosure will be described in greater detail below with reference to the accompanying drawings. While the drawings illustrate exemplary embodiments, it should be understood that the present disclosure may be embodied in various forms and should not be construed as limited to the specific embodiments set forth herein. Rather, these embodiments are provided so that this disclosure will be thorough and complete, and will fully convey the scope of the disclosure to those skilled in the art.

In the description of the embodiments of the present disclosure, it should be understood that terms such as "including" or "having" are intended to indicate the presence of the disclosed features, numbers, steps, acts, components, parts, or combinations thereof in this specification, and do not preclude the possibility of the presence of one or more other features, numbers, steps, acts, components, parts, or combinations thereof.

Unless otherwise specified, "/" means "or". For example, A/B may mean A or B. "and/or" in this document is merely an association relationship describing associated objects, indicating that three relationships may exist. For example, A and/or B may indicate three cases: A alone, A and B together, and B alone.

The terms "first", "second", etc. are used merely to distinguish similar or identical technical features for ease of description, and should not be construed as indicating or implying relative importance or quantity. Thus, a feature defined as "first", "second", etc. may explicitly or implicitly include one or more of that feature. In the description of the embodiments of the present disclosure, unless otherwise specified, the term "plurality" means two or more than two.

It should be noted that the embodiments of the present disclosure and the features therein may be combined with each other unless the context clearly dictates otherwise. The present disclosure will be described in detail below with reference to the drawings and in conjunction with specific implementations.

In the embodiments of the present disclosure, the reflector may act as an executing entity to correct the distance measurement between the initiator and the reflector. An example is provided below for explanation.

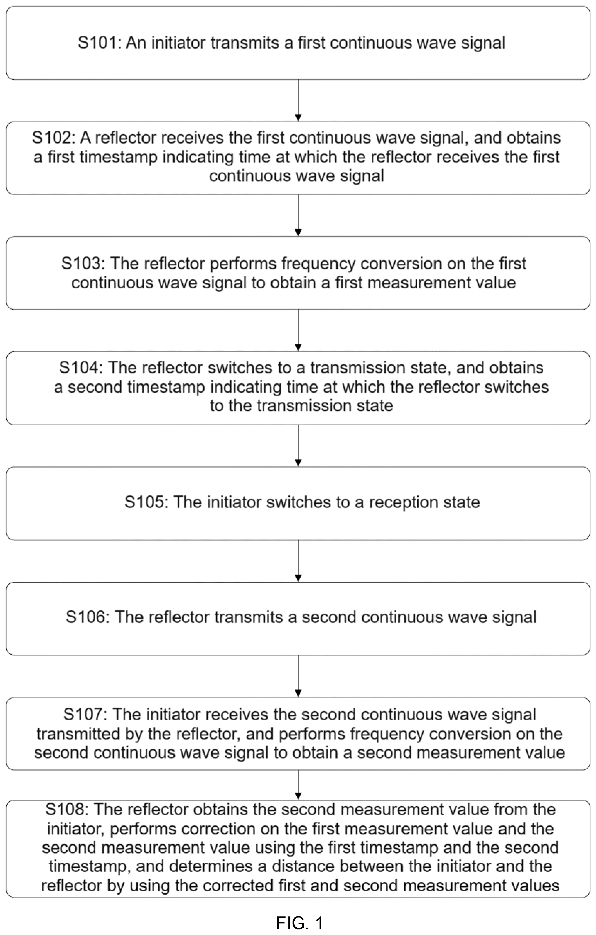

As shown in FIG. 1, the Bluetooth ranging correction method provided by the present disclosure is applicable to a Bluetooth ranging apparatus including an initiator and a reflector. The method includes:
S101: The initiator transmits a first continuous wave signal.
S102: The reflector receives the first continuous wave signal, and obtains a first timestamp indicating time at which the reflector receives the first continuous wave signal.
S103: The reflector performs frequency conversion on the first continuous wave signal to obtain a first measurement value.
S104: The reflector switches to a transmission state, and obtains a second timestamp indicating time at which the reflector switches to the transmission state.
S105: The initiator switches to a reception state.
S106: The reflector transmits a second continuous wave signal.
S107: The initiator receives the second continuous wave signal transmitted by the reflector, and performs frequency conversion on the second continuous wave signal to obtain a second measurement value.
S108: The reflector obtains the second measurement value from the initiator, performs correction on the first measurement value and the second measurement value using the first timestamp and the second timestamp, and determines a distance between the initiator and the reflector by using the corrected first and second measurement values.

In some possible embodiments, a digital mixer of the reflector remains enabled during the Bluetooth ranging correction, to allow for compensation for variation in phase of the digital mixer of the reflector introduced in measurements across channels of different frequencies.

In the embodiment of the present disclosure, by utilizing the first timestamp and the second timestamp, the phase deviation caused by the inconsistency between the digital intermediate frequency and the actual intermediate frequency can be eliminated. Specifically, the reflector performs correction on the product using the first timestamp and the second timestamp, thereby eliminating the phase deviation caused by the inconsistency between the digital intermediate frequency and the actual intermediate frequency. Thus, the technical solution of the present disclosure can correct the distance measurement between the initiator and the reflector and reduce measurement deviation during Bluetooth ranging.

As a possible implementation, in the embodiment of the present disclosure, the digital mixer of the reflector remains enabled during the Bluetooth ranging correction, to allow for compensation for variation in the phase γ of the digital mixer of the reflector introduced in measurements for the first continuous wave signals across channels of different frequencies, thereby compensating for the difference between the carrier frequency of the initiator and that of the reflector. In the method of the embodiment of the present disclosure, by utilizing the first timestamp and the second timestamp and keeping the digital mixer of the reflector enabled, the continuity of the phase of the PLL during the transmit-receive switching process can be ensured. This eliminates the difference in the phase of the digital mixer during frequency sweeping and eliminates the difference between the digital intermediate frequency and the carrier frequency, thereby reducing measurement deviation during Bluetooth ranging.

In practical applications, the reflector may calculate the product of the first measurement value PCTi and the second measurement value PCTr using the first timestamp and the second timestamp. The reflector determines the distance between the initiator and the reflector based on the product of the first measurement value PCTi and the second measurement value PCTr in channels of different frequencies, thereby correcting the distance measurement between the initiator and the reflector and reducing measurement deviation during Bluetooth ranging.

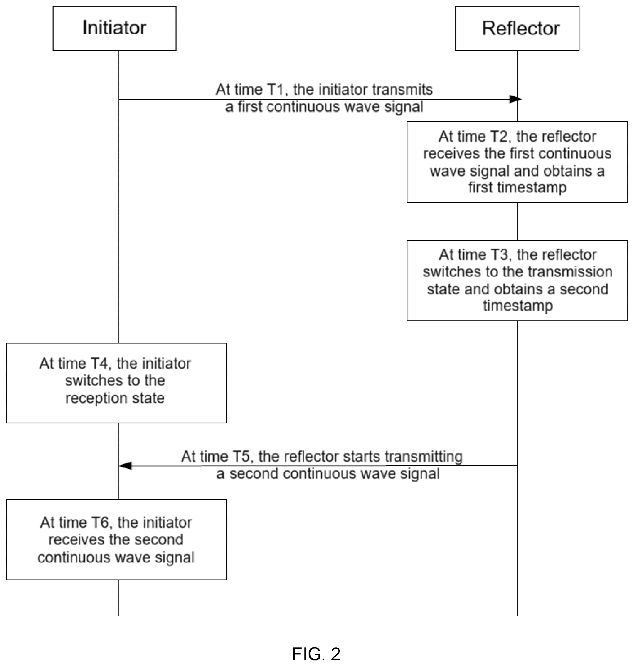

As shown in FIG. 2, in the embodiment of the present disclosure, the reflector acts as the party performing calibration. At time T1, the initiator starts transmitting a continuous wave (CW).

In the transmission state, a phase-locked loop (PLL) operates at a frequency Ftx. In the reception (Rx) state, the PLL operates at a frequency Frx. The digital mixer operates at a frequency Fdig. Here, Ftx=Frx+Fif, and Fif is approximately equal to Fdig.

At time T1, the initiator starts transmitting the first continuous wave signal.

At time T1, the phase of the initiator is α, and the first continuous wave signal transmitted by it is:
$exp \left(j\left(2πFtx\left(T1-T1\right)+α\right)\right) = exp \left(jα\right) .$

At time T1, the phase of the reflector is β, and its PLL operating state is:
$exp \left(j\left(2πFrx\left(t-T1\right)+β\right)\right) .$

At time T2, the reflector receives the first continuous wave signal.

At time T2, the phase of the digital mixer of the reflector is γ, and its operating state is:
$exp \left(j\left(2πFdig\left(t-T2\right)+γ\right)\right) .$

The continuous wave is down-converted by the reflector's PLL and digital mixer to obtain the first measurement value PCTi: 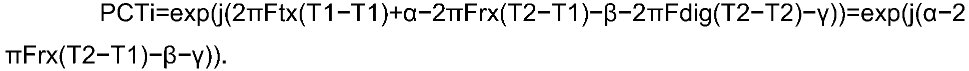 PCTi=exp(j(2π(T1-T1)+α-2πFrx(T2-T1)-β-2-πFdig(T2-T2)-γ))=exp(j(α-2 πFrx(T2-T1)-β-γ)).

At time T3, the reflector switches to the transmission (Tx) state.

The PLL operating state of the reflector becomes:
exp(j(2πFrx(T3-T1)+β+2πFtx(t-T3)+σ)), where σ represents the phase jump during the transmit-receive switch.

At time T4, the initiator switches to the reception (Rx) state.

The PLL operating state of the initiator is:
$exp \left(j\left(α+2πFtx\left(t-T1\right)\right)\right) .$

At time T5, the reflector starts transmitting the second continuous wave signal.

The second continuous wave signal transmitted by it is:
$exp \left(j\left(2πFrx\left(T3-T1\right)+β+2πFtx\left(T5-T3\right)+σ\right)\right) .$

At time T6, the initiator receives the second continuous wave signal.

The continuous wave is down-converted by the initiator's PLL to obtain the second measurement value PCTr:
$PCTr = exp \left(j\left(2πFrx\left(T3-T1\right)+β+2πFtx\left(T5-T3\right)-α-2πFtx\left(T6-T1\right)+σ\right)\right) .$

The reflector calculates the product PCTi*PCTr of the first measurement value PCTi and the second measurement value PCTr using the following formula: 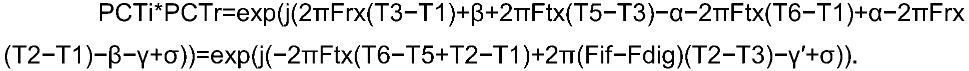 PCTi*PCTr=exp(j(2πFrx(T3-T1)+β+2πFtx(T5-T3)-α-2πFtx(T6-T1)+α-2πFrx (T2-T1)-β-γ+σ))=exp(j(-2πFtx(T6-T5+T2-T1)+2π(Fif-Fdig)(T2-T3)-γ'+σ)).

Here, T2-T1=T6-T5 represents the time of flight of the signal, and Fif=Ftx-Frx.

Ftx represents the operating frequency of the PLL in the transmission state, Frx represents the operating frequency of the PLL in the reception state, Fdig represents the operating frequency of the digital mixer, T1 represents the time when the initiator transmits the first continuous wave signal, T2 represents the time when the reflector receives the first continuous wave signal, T3 represents the time when the reflector switches to the transmission state, T4 represents the time when the initiator switches to the reception state, T5 represents the time when the reflector starts transmitting the second continuous wave signal, T6 represents the time when the initiator receives the second continuous wave signal, α represents the phase of the initiator at time T1, β represents the phase of the reflector at time T1, γ represents the phase of the digital mixer of the reflector at time T2, σ represents the phase jump of the initiator caused by switching between transmission and reception, Ftx=Frx+Fif, and γ' represents the phase of the digital mixer of the reflector at time T3.

It should be noted that for γ' variation across different channels, as long as the digital mixer remains enabled, compensation therefor is possible using the timestamp corresponding to T3. T2 and T3 are both at the reflector, and can be recorded by obtaining the first timestamp and the second timestamp.

In the embodiment of the present disclosure, the reflector may calculate the product PCTi*PCTr of the first measurement value PCTi and the second measurement value PCTr using the above formula. The reflector can then obtain the PCTi*PCTr corresponding to channels of different frequencies. Since the actions corresponding to T2 and T3 are both performed by the reflector, the reflector can obtain the value of T2-T3 in the above formula by obtaining the time T2 corresponding to the first timestamp and the time T3 corresponding to the second timestamp. Furthermore, since the digital mixer of the reflector remains enabled, the variation in the phase γ of the digital mixer of the reflector introduced into measurements for the first continuous wave signals across channels of different frequencies is compensatable. Therefore, γ' can be eliminated by using the timestamp corresponding to T3. Moreover, σ in the PCTi*PCTr corresponding to channels of different frequencies is also substantially consistent, so σ can also be eliminated.

It can be seen that after σ and γ' are eliminated, the present disclosure can calculate the signal flight time T2-T1 (T2-T1=T6-T5) using the time T2 indicated by the first timestamp and the time T3 indicated by the second timestamp. After determining the signal flight time, the distance between the initiator and the reflector can be determined based on the signal flight time. Thus, in the method of the embodiment of the present disclosure, by utilizing the first timestamp and the second timestamp and keeping the digital mixer of the reflector enabled, the continuity of the phase of the PLL during the transmit-receive switching process can be ensured. This eliminates the difference in the phase of the digital mixer during frequency sweeping and eliminates the difference between the digital intermediate frequency and the carrier frequency, thereby reducing measurement deviation during Bluetooth ranging.

Based on the above Bluetooth ranging correction method performed by the reflector, an embodiment of the present disclosure further provides a Bluetooth ranging correction method that can be implemented by the reflector.

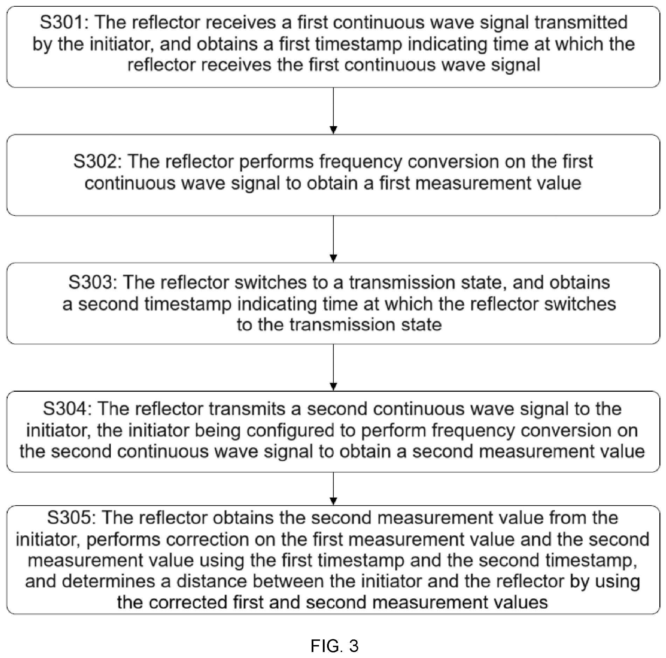

As shown in FIG. 3, the present disclosure provides a Bluetooth ranging correction method applicable to a reflector of a Bluetooth ranging apparatus further including an initiator. The method includes:
S301: The reflector receives a first continuous wave signal transmitted by the initiator, and obtains a first timestamp indicating time at which the reflector receives the first continuous wave signal.
S302: The reflector performs frequency conversion on the first continuous wave signal to obtain a first measurement value.
S303: The reflector switches to a transmission state, and obtains a second timestamp indicating time at which the reflector switches to the transmission state.
S304: The reflector transmits a second continuous wave signal to the initiator, the initiator being configured to perform frequency conversion on the second continuous wave signal to obtain a second measurement value.
S305: The reflector obtains the second measurement value from the initiator, performs correction on the first measurement value and the second measurement value using the first timestamp and the second timestamp, and determines a distance between the initiator and the reflector by using the corrected first and second measurement values.

As a possible implementation, a digital mixer of the reflector remains enabled during the Bluetooth ranging correction, to allow for compensation for variation in phase of the digital mixer of the reflector introduced in measurements across channels of different frequencies.

As a possible implementation, performing, by the reflector, correction on the first measurement value and the second measurement value using the first timestamp and the second timestamp includes: determining, by the reflector, a product of the first measurement value and the second measurement value; and performing, by the reflector, correction on the product using the first timestamp and the second timestamp.

As a possible implementation, the first measurement value PCTi is calculated using the following formula: 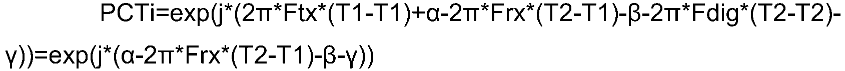 PCTi=expo*(2π*Ftx*(T1-T1)+α-2π*Frx*(T2-T1)-β-2π*Fdig*(T2-T2)-γ))=exp(j*(α-2π*Frx*(T2-T1)-β-γ))
wherein Ftx represents an operating frequency of a PLL in a transmission state, Frx represents an operating frequency of the PLL in a reception state, Fdig represents an operating frequency of a digital mixer, T1 represents time at which the initiator transmits the first continuous wave signal, T2 represents time at which the reflector receives the first continuous wave signal, α represents a phase of the initiator at time T1, β represents a phase of the reflector at time T1, and γ represents a phase of the digital mixer of the reflector at time T2.

As a possible implementation, the second measurement value PCTr is calculated using the following formula:
$PCTr = exp \left(j*\left(2π*Frx*\left(T3-T1\right)+β+2π*Ftx*\left(T5-T3\right)-α-2π*Ftx*\left(T6-T1\right)+σ\right)\right)$
wherein T3 represents time at which the reflector switches to the transmission state, T4 represents time at which the initiator switches to the reception state, T5 represents time at which the reflector starts transmitting the second continuous wave signal, T6 represents time at which the initiator receives the second continuous wave signal, and σ represents a phase jump of the initiator caused by switching between transmission and reception.

As a possible implementation, the reflector calculates a product PCTi*PCTr of the first measurement value PCTi and the second measurement value PCTr using the following formula: 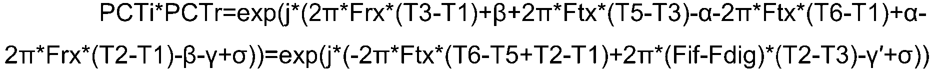 PCTi*PCTr=exp(j*(2π*Frx*(T3-T1)+β+2π*Ftx*(T5-T3)-α-2π*Ftx*(T6-T1)+α-2π*Frx*(T2-T1)-β-γ+σ))=exp(j*(-2π*Ftx*(T6-T5+T2-T1)+2π*(Fif-Fdig)*(T2-T3)-γ'+σ))
wherein Ftx=Frx+Fif, and γ' represents a phase of the digital mixer of the reflector at time T3.

It should be noted that the Bluetooth ranging correction method in the embodiment of the present disclosure can implement the various processes of the previous method embodiments and achieve the same effects and functions, which will not be repeated here.

In the description of this specification, descriptions with reference to the terms "some possible implementations," "some implementations," "example," "specific example," or "some examples" mean that specific features, structures, materials, or characteristics described in conjunction with the implementation or example are included in at least one implementation or example of the present disclosure, and the above terms do not necessarily refer to the same implementation or example. Furthermore, the described specific features, structures, materials, or characteristics may be combined in any suitable manner in any one or more implementations or examples. In addition, those skilled in the art may integrate and combine different implementations or examples described in this specification, as well as features of different implementations or examples, without conflicting with each other.

With respect to the method flowcharts of the embodiments of the present disclosure, certain operations are described as different steps performed in a certain order. Such flowcharts are illustrative and not restrictive. Certain steps described herein may be grouped together and performed in a single operation, certain steps may be divided into multiple sub-steps, and certain steps may be performed in a different order than shown herein. The various steps shown in the flowcharts may be implemented in any manner by any circuit structure and/or tangible mechanism (e.g., by software running on a computer device, hardware (e.g., logic functions implemented by a processor or chip), etc., and/or any combination thereof).

Those skilled in the art will appreciate that the order of writing the steps in the methods described in the above detailed description does not imply a strict order of execution, and the specific order of execution of the steps should be determined by their function and possible inherent logic.

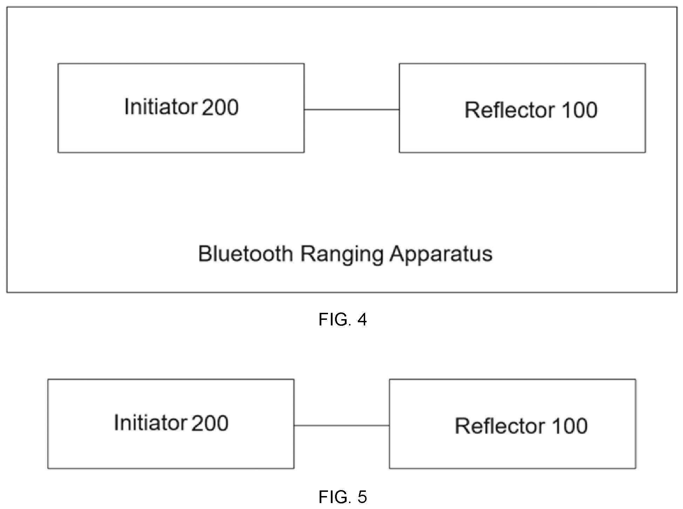

Based on the Bluetooth ranging correction method provided by the above embodiments, an embodiment of the present disclosure further provides a Bluetooth ranging apparatus. As shown in FIG. 4, the Bluetooth ranging apparatus provided by an embodiment of the present disclosure includes an initiator 200 and a reflector 100.

The initiator 200 is configured to transmit a first continuous wave signal.

The reflector 100 is configured to receive the first continuous wave signal, and obtain a first timestamp indicating time at which the reflector 100 receives the first continuous wave signal.

The reflector 100 is configured to perform frequency conversion on the first continuous wave signal to obtain a first measurement value.

The reflector 100 is configured to switch to a transmission state, and obtain a second timestamp indicating time at which the reflector 100 switches to the transmission state.

The initiator 200 is configured to switch to a reception state.

The reflector 100 is configured to transmit a second continuous wave signal.

The initiator 200 is configured to receive the second continuous wave signal transmitted by the reflector 100, and perform frequency conversion on the second continuous wave signal to obtain a second measurement value.

The reflector 100 is configured to obtain the second measurement value from the initiator 200, and perform correction on the first measurement value and the second measurement value using the first timestamp and the second timestamp, wherein the first measurement value and the second measurement value after the correction are used to determine a distance between the initiator 200 and the reflector 100.

It should be noted that the Bluetooth ranging apparatus in the embodiment of the present disclosure includes various components for implementing the processes of the previous method embodiments and achieves the same effects and functions, which will not be repeated here.

Based on the Bluetooth ranging correction method provided by the above embodiments, an embodiment of the present disclosure further provides a reflector. As shown in FIG. 5, the reflector 100 provided by an embodiment of the present disclosure is applicable to a Bluetooth ranging apparatus further including an initiator 200.

The reflector 100 is configured to receive a first continuous wave signal transmitted by the initiator 200, and obtain a first timestamp indicating time at which the reflector 100 receives the first continuous wave signal.

The reflector 100 is configured to perform frequency conversion on the first continuous wave signal to obtain a first measurement value.

The reflector 100 is configured to switch to a transmission state, and obtain a second timestamp indicating time at which the reflector 100 switches to the transmission state.

The reflector 100 is configured to transmit a second continuous wave signal to the initiator 200, the initiator 200 being configured to perform frequency conversion on the second continuous wave signal to obtain a second measurement value.

The reflector 100 is configured to obtain the second measurement value from the initiator 200, and perform correction on the first measurement value and the second measurement value using the first timestamp and the second timestamp, wherein the first measurement value and the second measurement value after the correction are used to determine a distance between the initiator 200 and the reflector 100.

It should be noted that the reflector in the embodiment of the present disclosure includes various components for implementing the processes of the previous method embodiments and achieves the same effects and functions, which will not be repeated here.

According to some embodiments of the present disclosure, a Bluetooth ranging apparatus according to an embodiment of the present disclosure is provided for executing the Bluetooth ranging correction method shown in FIG. 1 or FIG. 3. The apparatus includes: at least one processor; and a memory communicatively coupled to the at least one processor; where the memory has stored therein instructions executable by the at least one processor, and the instructions, when executed by the at least one processor, cause the at least one processor to perform the Bluetooth ranging correction method of the above embodiments.

According to some embodiments of the present disclosure, a non-volatile computer storage medium for the Bluetooth ranging correction method is provided, having stored thereon computer-executable instructions configured to, when executed by a processor, cause the processor to perform the Bluetooth ranging correction method of the above embodiments.

Computer-readable medium includes both permanent and non-permanent, removable and non-removable medium, and information storage can be achieved by any method or technology. Information may be computer-readable instructions, data structures, program modules, or other data. Examples of computer-readable storage medium include, but are not limited to, phase-change memory (PRAM), static random-access memory (SRAM), dynamic random-access memory (DRAM), other types of random-access memory (RAM), read-only memory (ROM), electrically erasable programmable read-only memory (EEPROM), flash memory or other memory technologies, compact disc read-only memory (CD-ROM), digital versatile disc (DVD) or other optical storage, magnetic cassette tape, magnetic tape, magnetic disk storage or other magnetic storage devices, or any other non-transmission medium that can be used to store information that can be accessed by a computing device. Furthermore, although the operations of the method of the present disclosure are shown in a particular order in the drawings, this does not require or imply that the operations must be performed in that particular order, or that all of the operations shown must be performed to achieve the desired result. Additionally, certain steps may be omitted, multiple steps may be combined into one step for execution, and/or one step may be decomposed into multiple sub-steps for execution.

Although the spirit and principles of the present disclosure have been described above with reference to several specific embodiments, it should be understood that the present disclosure is not limited to the specific embodiments disclosed, and the division of aspects does not imply that features in these aspects cannot be combined. The present disclosure is intended to cover various modifications and equivalent arrangements included within the spirit and scope of the appended claims.

## Claims

1. A method of Bluetooth ranging correction, applicable to a Bluetooth ranging apparatus comprising an initiator and a reflector, the method comprising:
transmitting, by the initiator, a first continuous wave signal;
receiving, by the reflector, the first continuous wave signal, and obtaining a first timestamp indicating time at which the reflector receives the first continuous wave signal;
performing, by the reflector, frequency conversion on the first continuous wave signal to obtain a first measurement value;
switching, by the reflector, to a transmission state, and obtaining a second timestamp indicating time at which the reflector switches to the transmission state;
switching, by the initiator, to a reception state;
transmitting, by the reflector, a second continuous wave signal;
receiving, by the initiator, the second continuous wave signal transmitted by the reflector, and performing frequency conversion on the second continuous wave signal to obtain a second measurement value; and
obtaining, by the reflector, the second measurement value from the initiator, performing correction on the first measurement value and the second measurement value using the first timestamp and the second timestamp, and determining a distance between the initiator and the reflector by using the corrected first and second measurement values.

2. The method according to claim 1, wherein a digital mixer of the reflector remains enabled during the Bluetooth ranging correction, to allow for compensation for variation in phase of the digital mixer of the reflector introduced in measurements across channels of different frequencies.

3. The method according to claim 1, wherein performing, by the reflector, correction on the first measurement value and the second measurement value using the first timestamp and the second timestamp comprises:
determining, by the reflector, a product of the first measurement value and the second measurement value; and
performing, by the reflector, correction on the product using the first timestamp and the second timestamp.

4. The method according to claim 1, wherein the first measurement value is calculated as: 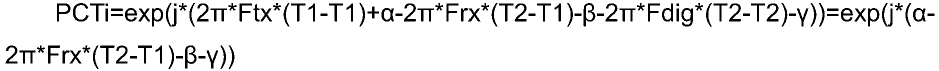 PCTi=exp(j*(2π*Ftx*(T1-T1 )+α-2π*Frx*(T2-T1)-β-2π*Fdig*(T2-T2)-γ))=exp(j*(α-2π*Frx*(T2-T1)-β-γ)) wherein Ftx represents an operating frequency of a phase-locked loop (PLL) in a transmission state, Frx represents an operating frequency of the PLL in a reception state, Fdig represents an operating frequency of a digital mixer, T1 represents time at which the initiator transmits the first continuous wave signal, T2 represents time at which the reflector receives the first continuous wave signal, α represents a phase of the initiator at time T1, β represents a phase of the reflector at time T1, and γ represents a phase of the digital mixer of the reflector at time T2.

5. The method according to claim 4, wherein the second measurement value is calculated as: $PCTr = exp \left(j*\left(2π*Frx*\left(T3-T1\right)+β+2π*Ftx*\left(T5-T3\right)-α-2π*Ftx*\left(T6-T1\right)+σ\right)\right)$ wherein T3 represents time at which the reflector switches to the transmission state, T4 represents time at which the initiator switches to the reception state, T5 represents time at which the reflector starts transmitting the second continuous wave signal, T6 represents time at which the initiator receives the second continuous wave signal, and σ represents a phase jump of the initiator caused by switching between transmission and reception.

6. The method according to claim 5, wherein the reflector calculates a product of the first measurement value and the second measurement value as: 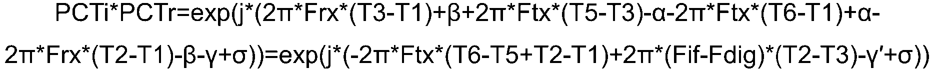 PCTi*PCTr=exp(j*(2π*Frx*(T3-T1)+β+2π*Ftx*(T5-T3)-α-2π*Ftx*(T6-T1)+α-2π*Frx*(T2-T1)-β-γ+σ))=exp(j*(-2π*Ftx*(T6-T5+T2-T1)+2π*(Fif-Fdig)*(T2-T3)-γ'+σ)) wherein Ftx=Frx+Fif, and γ' represents a phase of the digital mixer of the reflector at time T3.

7. A method of Bluetooth ranging correction, applicable to a reflector of a Bluetooth ranging apparatus further comprising an initiator, the method comprising:
receiving, by the reflector, a first continuous wave signal transmitted by the initiator, and obtaining a first timestamp indicating time at which the reflector receives the first continuous wave signal;
performing, by the reflector, frequency conversion on the first continuous wave signal to obtain a first measurement value;
switching, by the reflector, to a transmission state, and obtaining a second timestamp indicating time at which the reflector switches to the transmission state;
transmitting, by the reflector, a second continuous wave signal to the initiator, the initiator being configured to perform frequency conversion on the second continuous wave signal to obtain a second measurement value; and
obtaining, by the reflector, the second measurement value from the initiator, performing correction on the first measurement value and the second measurement value using the first timestamp and the second timestamp, and determining a distance between the initiator and the reflector by using the corrected first and second measurement values.

8. The method according to claim 7, wherein a digital mixer of the reflector remains enabled during the Bluetooth ranging correction, to allow for compensation for variation in phase of the digital mixer of the reflector introduced in measurements across channels of different frequencies.

9. The method according to claim 7, wherein performing, by the reflector, correction on the first measurement value and the second measurement value using the first timestamp and the second timestamp comprises:
determining, by the reflector, a product of the first measurement value and the second measurement value; and
performing, by the reflector, correction on the product using the first timestamp and the second timestamp.

10. The method according to claim 7, wherein the first measurement value is calculated as: 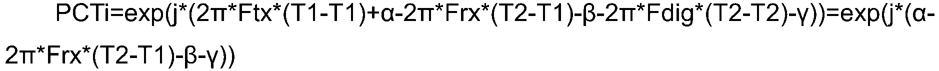 PCTi=exp(j*(2π*Ftx*(T1-T1)+α-2π*Frx*(T2-T1)-β-2π*Fdig*(T2-T2)-γ))=exp(j*(α-2π*Frx*(T2-T1)-β-γ)) wherein Ftx represents an operating frequency of a PLL in a transmission state, Frx represents an operating frequency of the PLL in a reception state, Fdig represents an operating frequency of a digital mixer, T1 represents time at which the initiator transmits the first continuous wave signal, T2 represents time at which the reflector receives the first continuous wave signal, α represents a phase of the initiator at time T1, β represents a phase of the reflector at time T1, and γ represents a phase of the digital mixer of the reflector at time T2.

11. The method according to claim 10, wherein the second measurement value is calculated as: $PCTr = exp \left(j*\left(2π*Frx*\left(T3-T1\right)+β+2π*Ftx*\left(T5-T3\right)-α-2π*Ftx*\left(T6-T1\right)+σ\right)\right)$ wherein T3 represents time at which the reflector switches to the transmission state, T4 represents time at which the initiator switches to the reception state, T5 represents time at which the reflector starts transmitting the second continuous wave signal, T6 represents time at which the initiator receives the second continuous wave signal, and σ represents a phase jump of the initiator caused by switching between transmission and reception.

12. The method according to claim 11, wherein the reflector calculates a product of the first measurement value and the second measurement value as: 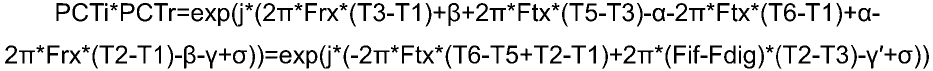 PCTi*PCTr=exp(j*(2π*Frx*(T3-T1)+β+2π*Ftx*(T5-T3)-α-2π*Ftx*(T6-T1)+α-2π*Frx*(T2-T1)-β-γ+σ))=exp(j*(-2π*Ftx*(T6-T5+T2-T1)+2π*(Fif-Fdig)*(T2-T3)-γ'+σ)) wherein Ftx=Frx+Fif, and γ' represents a phase of the digital mixer of the reflector at time T3.

13. A Bluetooth ranging apparatus, comprising an initiator and a reflector;
wherein the initiator is configured to transmit a first continuous wave signal;
the reflector is configured to receive the first continuous wave signal, and obtain a first timestamp indicating time at which the reflector receives the first continuous wave signal;
the reflector is configured to perform frequency conversion on the first continuous wave signal to obtain a first measurement value;
the reflector is configured to switch to a transmission state, and obtain a second timestamp indicating time at which the reflector switches to the transmission state;
the initiator is configured to switch to a reception state;
the reflector is configured to transmit a second continuous wave signal;
the initiator is configured to receive the second continuous wave signal transmitted by the reflector, and perform frequency conversion on the second continuous wave signal to obtain a second measurement value; and
the reflector is configured to obtain the second measurement value from the initiator, perform correction on the first measurement value and the second measurement value using the first timestamp and the second timestamp, and determine a distance between the initiator and the reflector by using the corrected first and second measurement values.

14. A reflector for a Bluetooth ranging apparatus further comprising an initiator;
wherein the reflector is configured to receive a first continuous wave signal transmitted by the initiator, and obtain a first timestamp indicating time at which the reflector receives the first continuous wave signal;
the reflector is configured to perform frequency conversion on the first continuous wave signal to obtain a first measurement value;
the reflector is configured to switch to a transmission state, and obtain a second timestamp indicating time at which the reflector switches to the transmission state;
the reflector is configured to transmit a second continuous wave signal to the initiator, the initiator being configured to perform frequency conversion on the second continuous wave signal to obtain a second measurement value; and
the reflector is configured to obtain the second measurement value from the initiator, perform correction on the first measurement value and the second measurement value using the first timestamp and the second timestamp, and determine a distance between the initiator and the reflector by using the corrected first and second measurement values.

15. A computer-readable storage medium having stored thereon a program that, when executed by a multi-core processor, causes the multi-core processor to perform the method according to any one of claims 1 to 12.
